# EUROPÄISCHE PATENTANMELDUNG

(11) **EP 2 578 373 A1**
(43) Veröffentlichungstag der Anmeldung: **10.04.2013**
(21) Anmeldenummer: 12182062.5
(22) Anmeldetag: 28.08.2012
(51) Int. Cl.: B29C 45/28, H01F 7/16

(54) **Verfahren zum Betrieb mehrerer Nadelverschlussdüsen in einer Spritzgießvorrichtung**

(30) Priorität: 05.10.2011 DE 102011054214
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Buchhold, Jürgen

(57) **Zusammenfassung**

Bei einem Verfahren zum Betrieb mehrerer Nadelverschlussdüsen in einer Spritzgießvorrichtung sieht die Erfindung folgende Merkmale vor:
■ die Spritzgießvorrichtung weist wenigstens zwei Kavitäten und pro Kavität wenigstens eine Nadelverschlussdüse mit jeweils einer Verschlussnadel auf, die mittels eines elektromagnetischen Aktuators in eine Öffnungs- und in eine Schließstellung gebracht werden kann, um eine in der jeweils zugeordneten Kavität ausgebildete Angussöffnung freizugeben und zu verschließen,
■ jeder elektromagnetische Aktuator weist wenigstens einen Elektromagneten auf,
■ jede Verschlussnadel wird in der Öffnungs- und in der Schließstellung von wenigstens einem Permanentmagnet axial gehalten,
■ eine Steuereinheit erzeugt für jeden elektromagnetische Aktuator der Nadelverschlussdüsen individuelle Stromimpulse mit definierter und in der Steuereinheit hinterlegter Impulslänge,
■ ein von einem Stromimpuls durchströmter Elektromagnet eines elektromagnetischen Aktuators erzeugt ein elektromagnetisches Feld, sodass die Verschlussnadel von der Schließstellung in die Öffnungsstellung oder vice versa bewegt wird,
■ die Stromimpulse für wenigstens zwei elektromagnetische Aktuatoren werden zeitversetzt an diese gesendet.

## Beschreibung

Die Erfindung betrifft ein Verfahren zum Betrieb mehrerer Nadelverschlussdüsen in einer Spritzgießvorrichtung, gemäß dem Oberbegriff von Anspruch 1.

Spritzgießvorrichtungen dienen der Herstellung von Spritzgießteilen, insbesondere von Kunststoffteilen aus einer fließfähigen Masse, die in eine Form (auch Kavität genannt) eingespritzt wird und darin zumindest teilweise aushärtet. Dabei sind Spritzgießvorrichtungen bekannt, die eine Kavität oder mehrere Kavitäten aufweisen.

Bei Spritzgießvorrichtungen mit mehr als einer Kavität besteht das Problem, dass sich die einzelnen Hohlräume unterschiedlich schnell mit der einzubringenden fließfähigen Masse füllen. Dies hat zur Folge, dass entweder einzelne Kavitäten ihren maximalen Füllstand relativ früh erreichen und lange druckbeaufschlagt sind, während andere Kavitäten noch nicht einmal vollständig gefüllt sind, so dass die zu produzierenden Kunststoffteile Untergewicht haben oder unvollständig ausgebildet sind. Die Ausschussrate ist mithin sehr hoch, was sich ungünstig auf die Herstellkosten auswirkt.

Um dem zu begegnen ist es beispielsweise aus EP 0 468 485 A2 bekannt, eine Balancierung der Strömungskanäle innerhalb der Spritzgießvorrichtung, insbesondere innerhalb des Verteilers vorzunehmen, d.h. die Düsenzuführkanäle und Verteilerkanäle innerhalb der Spritzgießvorrichtung werden hinsichtlich ihrer Anordnung, ihrem Durchmesser und ihrer Ausrichtung so ausgelegt, dass die Kavitäten möglichst gleich schnell mit der fließfähigen Masse gefüllt werden. Dies erfordert jedoch umfangreiche Berechnungen bei der Auslegung der Spritzgießvorrichtung. Ferner schränkt eine Balancierung des Systems die Gestaltungsfreiheit ein. Hinzu kommt, dass bei einem Wechsel auf eine fließfähige Masse mit anderer Charakteristik die gewünschte Balancierung nicht mehr gegeben ist und die Spritzgießvorrichtung neu berechnet und zumindest teilweise ausgetauscht werden muss. Ein Wechsel des zu verarbeitenden Materials aufgrund unterschiedlicher Designanforderungen, z.B. hinsichtlich Farbe, Haptik oder Festigkeit, wird damit erheblich erschwert und ist folglich oft nur mit Werkzeugänderungen realisierbar.

Alternativ oder ergänzend zur Balancierung sieht US 3,491,408 A vor, dass jede Spritzgießdüse innerhalb der Spritzgießvorrichtung einen Ventilkörper aufweist, der in eine Schließstellung und eine Öffnungsstellung gebracht werden kann, wobei jeder Ventilkörper einen manuell einstellbaren Gewindeanschlag zum Einstellen bzw. Justieren der Öffnungsstellung aufweist. Dadurch ist es möglich, den Durchflussquerschnitt jeder Spritzgießdüse individuell einzustellen, so dass jede Düse mit jedem Zyklus eine genau definierte Menge der fließfähigen Masse in die jeweils zugeordnete Kavität einbringt. Letztere werden dadurch stets gleichmäßig gefüllt.

Derartige Lösungen führen zwar zu brauchbaren Ergebnissen, sie sind in der Praxis jedoch häufig durch Anwenderfehler behaftet. Insbesondere können die Gewindeanschläge von Unbefugten bewusst oder unbewusst verstellt werden, so dass die Spritzgießvorrichtung neu eingestellt werden muss. Hierfür sind meist aufwendige Versuche durchzuführen, um den Füllgrad der einzelnen Kavitäten festzustellen. Außerdem müssen die Versuche selbst dann durchgeführt werden, wenn eine der Spritzgießdüsen ausgetauscht wird, weil auch in diesem Fall das System neu justiert und balanciert werden muss. Letzteres tritt auch dann ein, wenn ein Wechsel der fließfähigen Masse oder der Austausch eines Werkzeugeinsatzes ansteht. Auch dann muss dass System über die einzelnen Ventilkörper neu justiert werden. Eine solche Lösung ist daher bei häufigen Farb- oder Materialwechseln in der Praxis nur wenig tauglich.

EP 1 013 395 A1 verwendet ebenfalls Spritzgießdüsen, deren Ventilkörper über verstellbare Anschläge justiert werden können, um die Durchflussquerschnitte der einzelnen Spritzgießdüsen individuell einstellen zu können. Jeder Anschlag ist jedoch derart ausgebildet, dass er während eines Öffnungszyklus verstellbar ist. Dadurch ist es möglich, den Durchsatz der fließfähigen Masse pro Zeiteinheit während der Öffnungsstellung einer Verschlussnadel zu verändern. Das gesamte System ist äußerst komplex aufgebaut und damit schadensanfällig und teuer.

Ziel der Erfindung ist es, die genannten Nachteile des Standes der Technik zu überwinden und eine Lösung bereitzustellen, die mit einfachen Mitteln kostengünstig aufgebaut ist und eine gleichmäßige Befüllung der Kavitäten einer Spritzgießvorrichtung mit einer fließfähigen Masse ermöglicht. Angestrebt wird ferner eine flexible und einfache Handhabung sowie eine rasche und problemlose Anpassung an veränderte Materialien, Formwerkzeuge und/oder Parameter.

Hauptmerkmale der Erfindung sind im kennzeichnenden Teil von Anspruch 1 angegeben. Ausgestaltungen sind Gegenstand der Ansprüche 2 bis 11.

Bei einem Verfahren zum Betrieb mehrerer Nadelverschlussdüsen in einer Spritzgießvorrichtung sieht die Erfindung folgende Merkmale vor:
■ die Spritzgießvorrichtung weist wenigstens zwei Kavitäten und pro Kavität wenigstens eine Nadelverschlussdüse auf,
■ jede Nadelverschlussdüse hat eine Verschlussnadel, die mittels eines elektromagnetischen Aktuators in eine Öffnungs- und in eine Schließstellung gebracht werden kann, um eine in der jeweils zugeordneten Kavität ausgebildete Angussöffnung freizugeben und zu verschließen,
■ jeder elektromagnetische Aktuator weist wenigstens einen Elektromagneten auf,
■ jede Verschlussnadel wird in der Öffnungs- und in der Schließstellung von wenigstens einem Permanentmagnet axial gehalten,
■ eine Steuereinheit der Spritzgießvorrichtung erzeugt für jeden elektromagnetische Aktuator der Nadelverschlussdüsen individuelle Stromimpulse,
■ die Stromimpulse haben eine definierte und in der Steuereinheit hinterlegte Impulslänge,
■ ein von einem Stromimpuls durchströmter Elektromagnet eines elektromagnetischen Aktuators erzeugt ein elektromagnetisches Feld, sodass die Kraft zwischen der Verschlussnadel und dem Permanentmagnet überwunden und die Verschlussnadel von der Schließstellung in die Öffnungsstellung oder von der Öffnungsstellung in die Schließstellung bewegt wird,
■ die Stromimpulse für wenigstens zwei elektromagnetische Aktuatoren werden zeitversetzt an diese gesendet.

Durch den Einsatz von elektromagnetischen Aktuatoren ist eine direkte Betätigung der zugeordneten Verschlussnadel möglich. Hierdurch müssen nur sehr geringe Masseträgheiten überwunden werden, was sehr schnelle Schaltzeiten ermöglicht. Eine auf diese Weise angetriebene Verschlussnadel kann innerhalb weniger hundertstel Sekunden von einer Öffnungsstellung in eine Schließstellung und wieder zurück gebracht werden. Aufgrund dieser sehr schnellen Verstellzeiten ist es möglich, die Füllung einer Kavität von der Öffnungszeit der Verschlussnadel abhängig zu machen. Damit wenigstens zwei Kavitäten in idealer Weise gefüllt werden, ist deshalb vorgesehen, dass die Stromimpulse von wenigstens zwei elektromagnetischen Aktuatoren zeitversetzt an diese gesendet werden. Dadurch kann die Öffnungsdauer jeder Verschlussnadel exakt gesteuert und eine Balancierung wirksam ergänzt oder ersetzt werden.

Die elektronische Steuereinheit kann eingespeicherte Daten archivieren und beispielsweise bestimmten Materialien und Werkzeugteilen zuordnen. Kommt es zu einem Farb-, Material-, oder Werkzeugwechsel können die Daten jederzeit rasch abgerufen werden. Eine mühsame manuelle Justierung jeder Nadelverschlussdüse und deren Anschläge ist daher nicht mehr notwendig. Zudem können die eingespeicherten Daten passwortgeschützt sein, sodass nur befugtes Personal Änderungen an diesen durchführen kann. Die Justierung der Verschlussnadeln kann daher durch Unbefugte weder bewusst noch unbewusst verändert werden.

Darüber hinaus ermöglicht das erfindungsgemäße Verfahren, die Länge der von der Steuereinheit erzeugten Stromimpulse in der Steuereinheit zu hinterlegen. Je nach Haftung/Reibung zwischen der Verschlussnadel und einer fließfähigen Masse kann die Impulslänge dann auf ein Minimum reduziert werden, bei dem die Verschlussnadel noch stets von einer Endstellung in die andere bewegbar ist.

Eine Weiterbildung der Erfindung sieht vor, dass die Stromimpulse um definierte und in der Steuereinheit hinterlegte Öffnungszeitdelta und/oder Schließzeitdelta zeitversetzt an wenigstens zwei elektromagnetische Aktuatoren gesendet werden. Dabei können die Öffnungszeitdeltas und/oder Schließzeitdeltas der zweiten Kavität relativ zu den Stromimpulsen der ersten Kavität ausgelegt sein, oder diese ergeben sich durch die Differenz zwischen absoluten Zeitpunkten von einem Stromimpuls eines ersten elektromagnetischen Aktuators und dem eines zweiten elektromagnetischen Aktuators. Sofern nur ein Öffnungszeitdelta vorgesehen ist, fällt der Öffnungszeitpunkt der zwei elektromagnetischen Aktuatoren auseinander und deren Schließzeitpunkte sind gleich. Ist hingegen nur ein Schließzeitdelta vorhanden, öffnen die elektromagnetischen Aktuatoren gleichzeitig und deren Schließzeitpunkte fallen auseinander. Wenn ein Öffnungszeitdelta und ein Schließzeitdelta vorliegen, fallen sowohl der Öffnungszeitpunkt als auch der Schließzeitpunkt der elektromagnetischen Aktuatoren auseinander.

Gemäß einer andere Ausbildung sind die Stromimpulse für einen elektromagnetischen Aktuator Öffnungsstromimpulse zum Verbringen einer Verschlussnadel von einer Schließstellung in eine Öffnungsstellung und Schließstromimpulse mit umgekehrter Stromrichtung zum Verbringen einer Verschlussnadel von einer Öffnungsstellung in eine Schließstellung, wobei die Öffnungsstromimpulse und/oder die Schließstromimpulse zeitversetzt an wenigstens zwei elektromagnetische Aktuatoren gesendet werden. Mittels der Aufteilung der Stromimpulse in Öffnungsstromimpulse und Schließstromimpulse kann ein elektromagnetisches Feld eines Elektromagneten umgekehrt werden. Somit reicht ein einziger Elektromagnet pro elektromagnetischen Aktuator aus, um die Verschlussnadel in die Öffnungsstellung und Schließstellung zu bewegen. Dementsprechend kann der elektromagnetische Aktuator kompakt gestaltet werden und dessen Herstellungskosten sind gering.

Dabei können die Öffnungsstromimpulse um definierte und in der Steuereinheit hinterlegte Öffnungszeitdelta und/oder die Schließstromimpulse um definierte und in der Steuereinheit hinterlegte Schließzeitdelta zeitversetzt an wenigstens zwei elektromagnetische Aktuatoren gesendet werden. Die Öffnungszeitdeltas und/oder Schließzeitdeltas der zweiten Kavität können wiederum relativ zu dem Öffnungsstromimpuls/Schließstromimpuls der ersten Kavität ausgelegt sein, oder diese ergeben sich durch die Differenz zwischen absoluten Zeitpunkten von einem Öffnungsstromimpuls/Schließstromimpuls eines ersten elektromagnetischen Aktuators und dem eines zweiten elektromagnetischen Aktuators. Sofern nur ein Öffnungszeitdelta vorgesehen ist, fällt der Öffnungszeitpunkt der zwei elektromagnetischen Aktuatoren auseinander und deren Schließzeitpunkte sind gleich. Ist hingegen nur ein Schließzeitdelta vorhanden, öffnen die elektromagnetischen Aktuatoren gleichzeitig und deren Schließzeitpunkte fallen auseinander. Wenn ein Öffnungszeitdelta und ein Schließzeitdelta vorliegen, fallen sowohl der Öffnungszeitpunkt als auch der Schließzeitpunkt der elektromagnetischen Aktuatoren auseinander.

Das Öffnungszeitdelta und/oder das Schließzeitdelta könnten in der Steuereinheit derart eingestellt werden, dass die Kavitäten während einer Öffnungsstellung der Verschlussnadeln mit einer idealen Menge an fließfähiger Masse gefüllt werden. Hierfür können Abspritzversuche unternommen werden, bis alle Kavitäten wie gewünscht gefüllt werden. Eine schlechte Balancierung der Spritzgießvorrichtung kann so ausgeglichen werden oder aber die Balancierung erfolgt vollständig durch die Öffnungs- und Schließzeitdeltas. Sofern Zwischenergebnisse der Abspritzversuche abgespeichert werden, sind diese ohne weiteres wieder abrufbar. Sollten Einstellungen bei den Versuchen in eine falsche Richtung laufen, kann ohne weiteres zu einer vorherigen abgespeicherten Einstellung zurückgewechselt werden. Hierdurch verkürzen sich die Abspritzversuche erheblich im Verhältnis zu manuell verstellbaren Spritzgießdüsen.

Aufgrund der Stellgeschwindigkeit der elektromagnetischen Aktuatoren, ist es von Vorteil, wenn das Öffnungszeitdelta und/oder das Schließzeitdelta mit einer Genauigkeit von wenigstens 1/100 Sekunde in der Steuereinheit hinterlegt sind. Somit kann die maximale Stellgeschwindigkeit der elektromagnetischen Aktuatoren voll ausgenutzt werden, und die Einspritzdauer der einzelnen Nadelverschlussdüsen ist sehr genau definierbar.

Dazu kann vorgesehen sein, dass mittels Sensoren eine Füllstandsmessung in den Kavitäten erfolgt und die Öffnungszeitdeltas und/oder die Schließzeitdeltas von der Steuereinheit berechnet und/oder angepasst werden. Auf diese Weise können manuelle Abspritzversuche zur Ermittlung der Öffnungszeitdeltas und/oder der Schließzeitdeltas deutlich reduziert oder aber ersetzt werden. Außerdem kann während der Produktion die korrekte Funktion des Spritzgießvorgangs überwacht werden und falls notwendig die Öffnungszeitdeltas und/oder die Schließzeitdeltas korrigiert werden. Beispielsweise könnte ein idealer Druckverlauf in der Steuereinheit hinterlegt sein und mittels eines Drucksensors in der Kavität während eines Produktionszyklus der tatsächliche Druckverlauf bestimmt und dieser mit dem idealen abgeglichen werden. Bei Abweichungen könnte die Steuereinheit eine Korrektur der Öffnungszeitdelta und/oder Schließzeitdelta vornehmen. Die hierfür benötigte Rechenkapazität der Steuereinheit kann wesentlich geringer sein als bei einer ausschließlichen Steuerung über Füllstandsmessungen und es wird ein sehr hohes Maß an Präzision und Gleichmäßigkeit der Spritzgießteile erreicht. Außerdem sind Schäden am Werkzeug von der Steuereinheit anhand der Abweichungen detektierbar und es könnte eine Fehlermeldung ausgegeben werden.

Besondere Vorteile ergeben sich erfindungsgemäß, wenn für unterschiedliche Spritzgussszenarien separate Öffnungszeitdeltas und/oder Schließzeitdeltas in der Steuereinheit hinterlegt sind, und eines der Spritzgussszenarien ausgewählt wird. Solche Spritzgussszenarien können insbesondere unterschiedliche fließfähige Massen, oder unterschiedliche Kavitäteneinsätze, oder eine Deaktivierung von wenigstens einer Kavität sein. Vor jedem Spritzgussszenariowechsel mussten im Stand der Technik alle Düsen einzeln neu eingestellt werden. Durch eine erfindungsgemäße Hinterlegung der Szenarien in der Steuereinheit sind diese beliebig oft und auf einfache Weise wieder aufrufbar und ein Szenariowechsel ist sehr schnell und unkompliziert möglich.

So können beispielsweise Kunststoffteile, die mit einer Ausnehmung und ohne eine Ausnehmung zu fertigen sind, beispielsweise eine Autotürverkleidung für manuelle Fensterheber und eine für elektronische Fensterheber, einfach durch einen Werkzeugeinsatz und einen Szenariowechsel mit Hilfe der Steuereinheit gefertigt werden.

Auch können Abspritzversuche durchgeführt werden und die jeweils gemachten Einstellungen gespeichert werden. Nach Überprüfung der Bauteile, die sich bei Laborprüfungen durchaus über eine längere Zeit (mehrere Wochen) strecken kann, kann das beste Szenario für die zukünftige Produktion ausgewählt werden.

Weiterhin bestünde die Möglichkeit, dass die Steuereinheit eine Deaktivierungsvorrichtung für jede einzelne Kavität und/oder für jeden elektromagnetischen Aktuator aufweist und wenigstens eine Kavität und/oder ein elektromagnetischer Aktuator deaktiviert wird. Durch die Auswahl eines hierfür vorgesehen Szenarios in der Steuereinheit, sind die verbleibenden Kavitäten sehr schnell und zuverlässig korrekt balanciert, sodass die korrekte Menge an fließfähiger Masse in jede von diesen Kavitäten gelangt.

Bevorzugt weist jede Verschlussnadel einen bewegungsgekoppelten Anker auf, der mit den Permanentmagneten und den Elektromagneten korrespondiert. Ein solcher Anker bietet eine Masse, die von einem Magnetfeld beeinflusst werden kann. Hierfür sollte der Anker wenigstens teilweise aus einem magnetisierbaren Material ausgebildet sein. Zudem kann jeder Anker Anschlagflächen ausbilden, die mit korrespondierenden Anschlägen Hubbegrenzungen für die Verschlussnadeln bilden. Hierdurch ist der Öffnungsquerschnitt der Angussöffnung und somit der Durchsatz von fließfähiger Masse in der Öffnungs- und in der Schließstellung genau definierbar. Alternativ könnten jedoch auch vom Anker unabhängige Anschlagmittel vorgesehen werden.

Jeder Anker kann einen Ankermagneten aufweisen, der mit den Permanentmagneten und den Elektromagneten korrespondiert. Somit geht nicht die gesamte magnetische Halte- und Beschleunigungskraft von den Permanent- und den Elektromagneten aus, sondern deren magnetische Felder werden von dem Ankermagnet zusätzlich unterstützt. Besonders schnelle Schaltzeiten von der Öffnungs- in die Schließstellung und umgekehrt sind so realisierbar, wodurch auch die eingespritzte Menge an fließfähiger Masse pro Kavität sehr genau festlegbar ist.

Eine Ausgestaltung der Erfindung sieht weiterhin vor, dass die Nadelverschlussdüsen über Düsenzuführkanäle und diese über einen gemeinsamen Verteiler strömungsverbunden sind. Dies ermöglicht, dass die Zuführung von fließfähiger Masse zu den Nadelverschlussdüsen durch eine einzige Vorrichtung durchgeführt werden kann. Eine solche ist preiswerter als eine Mehrzahl an Vorrichtungen für jede Kavität und die Komplexität und Fehleranfälligkeit sind gering. Mittels des Verteilers kann eine Balancierung durchgeführt werden, deren Ungenauigkeiten und fehlende Flexibilität mittels des erfindungsgemäßen Verfahrens ausgeglichen werden können.

Um eine möglichst kompakte Gestaltung der Nadelverschlussdüse und des elektromagnetischen Aktuators zu erreichen, wären die Permanentmagnete idealer Weise jeweils Bestandteil von letzterem.

Zusätzliche Funktionen könnten zudem die Benutzungsfreundlichkeit des erfindungsgemäßen Verfahrens weiter steigern. So könnte die Steuereinheit die Anzahl der Öffnungsstellungen und/oder der Schließstellungen der Verschlussnadeln speichern, vorzugsweise für jede einzelne Kavität. Somit sind Informationen darüber verfügbar, wie viele Bauteile bereits gefertigt wurden, und es könnten von diesen Werten beispielsweise Wartungsintervalle des Werkzeugs abhängig gemacht werden. Sofern einzelne Kavitäten teilweise deaktiviert werden, könnten die Deaktivierungen auch gleichmäßig auf die Kavitäten verteilt werden, sodass die Abnutzung der einzelnen Kavitäten gleichmäßig erfolgt. Auch die Dokumentation der Betriebsstunden eines Werkzeugs mittels der Steuereinheit könnte für einen Nutzer eine hilfreiche Information sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Spritzgießvorrichtung mit einer Steuereinheit und mit zwei Kavitäten, die jeweils eine Nadelverschlussdüse aufweisen;
- Fig. 2: einen elektromagnetischen Aktuator mit zwei Permanentmagneten und einer Verschlussnadel, die einen Anker mit Ankermagnet aufweist;
- Fig. 3: einen elektromagnetischen Aktuator mit einem Permanentmagneten und zwei Kernen, sowie mit einer Verschlussnadel mit einem Anker; und
- Fig. 4: ein Diagramm, welches die Öffnungsstellung und Schließstellung eines ersten und eines zweiten elektromagnetischen Aktuators, sowie von einer Steuereinheit erzeugte Stromimpulse für die Aktuatoren darstellt.

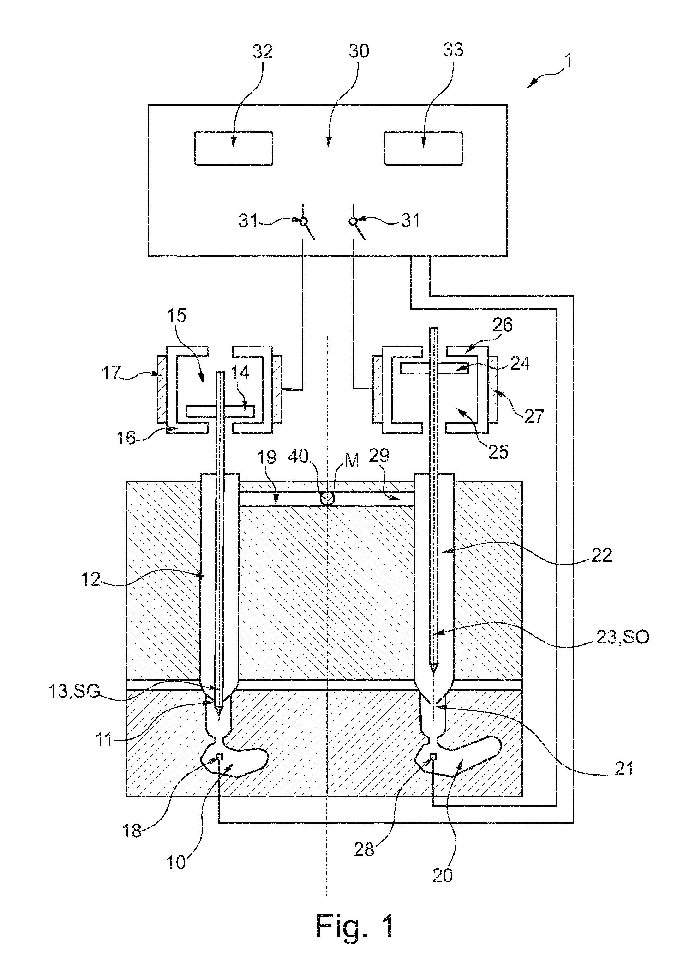

Fig. 1 zeigt eine Spritzgießvorrichtung 1 mit zwei Kavitäten 10, 20 und pro Kavität 10, 20 einer Nadelverschlussdüse 12, 22. Jede Nadelverschlussdüse 12, 22 hat eine Verschlussnadel 13, 23, die mittels eines elektromagnetischen Aktuators 15, 25 in eine Öffnungs- SO und in eine Schließstellung SG gebracht werden kann, um eine in der jeweils zugeordneten Kavität 10, 20 ausgebildete Angussöffnung 11, 21 freizugeben und zu verschließen. Dabei befindet sich gemäß der Darstellung die erste Verschlussnadel 13 in einer Schließstellung SG und die zweite Verschlussnadel 23 in einer Öffnungsstellung SO.

Um in der Öffnungsstellung SO eine fließfähige Masse M in die Kavitäten 10, 20 einbringen zu können, sind die Nadelverschlussdüsen 11, 21 über Düsenzuführkanäle 19, 29 und diese über einen gemeinsamen Verteiler 40 strömungsverbunden.

Die elektromagnetischen Aktuatoren 15, 25 weisen jeweils einen Elektromagneten 17, 27 und jede Verschlussnadel 13, 23 einen bewegungsgekoppelten Anker 14, 24 auf. Sowohl in der Öffnungsstellung SO als auch in der Schließstellung SG werden die Verschlussnadeln 13, 23 von Permanentmagneten 16, 26 axial gehalten. Insbesondere korrespondiert hierfür der Anker 14, 24 mit den Permanentmagneten 16, 26 und den Elektromagneten 17, 27.

Weiterhin ist eine Steuereinheit 30 mit einer Anzeigeeinrichtung 32, einer Bedieneinheit 33 und einer Deaktivierungsvorrichtung 31 vorhanden. Nunmehr ist es mittels der Steuereinheit 30 der Spritzgießvorrichtung 1 möglich für jeden elektromagnetischen Aktuator 15, 25 der Nadelverschlussdüsen 12, 22 individuelle Stromimpulse I1, I2 zu erzeugen. Die Stromimpulse I1, I2 haben eine definierte und in der Steuereinheit 30 hinterlegte Impulslänge L, welche über die Bedieneinheit 33 veränderbar ist. Um unbefugte Veränderungen zu verhindern sind diese durch Administratorrechte geschützt.

Ein von einem Stromimpuls I1, I2 durchströmter Elektromagnet 17, 27 eines elektromagnetischen Aktuators 15, 25 erzeugt ein elektromagnetisches Feld, so dass die Kraft zwischen der Verschlussnadel 13, 23 und dem Permanentmagnet 16, 26 überwunden und die Verschlussnadel 13, 23 von der Schließstellung SG in die Öffnungsstellung SO oder von der Öffnungsstellung SO in die Schließstellung SG bewegt wird. Um eine vollständige Füllung der Kavitäten 10, 20 mit fließfähiger Masse M und einen optimalen Werkzeugzyklus zu erreichen, werden die Stromimpulse I1, I2 zeitversetzt an die elektromagnetischen Aktuatoren 15, 25 gesendet. Insbesondere sind die Stromimpulse I1, I2 für die elektromagnetischen Aktuatoren 15, 25 Öffnungsstromimpulse IO1, IO2 zum Verbringen einer Verschlussnadel 13, 23 von einer Schließstellung SG in eine Öffnungsstellung SO oder Schließstromimpulse IS1, IS2 mit umgekehrter Stromrichtung zum Verbringen einer Verschlussnadel 13, 23 von einer Öffnungsstellung SO in eine Schließstellung SG.

Dabei werden dann die Öffnungsstromimpulse IO1, IO2 und die Schließstromimpulse IS1, IS2 zeitversetzt an die elektromagnetischen Aktuatoren 15, 25 gesendet. Insbesondere werden die Öffnungsstromimpulse IO1, IO2 um definierte und in der Steuereinheit 30 hinterlegte Öffnungszeitdelta TO und/oder die Schließstromimpulse IS1, IS2 um definierte und in der Steuereinheit 30 hinterlegte Schließzeitdelta TS zeitversetzt an die elektromagnetischen Aktuatoren 14, 24 gesendet. Auch die Öffnungszeitdelta TO und die Schließzeitdelta TS sind in der Steuereinheit 30 hinterlegt und mittels der Bedieneinheit 33 veränderbar. Um unbefugte Veränderungen zu verhindern sind diese wiederum durch Administratorrechte geschützt. Das Öffnungszeitdelta TO und das Schließzeitdelta TS sind in der Steuereinheit 30 mit einer Genauigkeit von wenigstens 1/100 Sekunde derart einstellbar, dass die Kavitäten 10, 20 während einer Öffnungsstellung SO der Verschlussnadeln 13, 23 mit einer idealen Menge an fließfähiger Masse M gefüllt werden.

Zusätzlich überwacht die Steuereinheit 30 mittels in den Kavitäten 10, 20 angeordneten Sensoren 18, 28 deren Füllstände und passt die Öffnungszeitdeltas TO und die Schließzeitdeltas TS moderat an. Das bedeutet, dass die Verschlussnadeln gerade nicht durch die Füllstandsmessung gesteuert werden, sondern nur im Anschluss korrigierend in die weiteren Werkzeugzyklen eingegriffen wird, indem die Öffnungszeitdeltas TO und die Schließzeitdeltas TS langsam und vorsichtig verändert werden, sofern die Füllstandsmessung eine Abweichung zum Optimum ergibt. Das Optimum kann zum Beispiel in Form eines Druck-Zeit-Graphen in der Steuereinheit hinterlegt sein und die Sensoren 18, 19 sind Drucksensoren.

Letztlich kann mittels der Bedieneinheit 33 zwischen unterschiedlichen in der Steuereinheit 30 hinterlegten Spritzgussszenarien ausgewählt werden. Die Spritzgussszenarien umfassen separate Öffnungszeitdeltas TO und Schließzeitdeltas TS, sodass unterschiedliche Materialien mit unterschiedlichen Viskositäten abgespritzt werden können. Zusätzlich liegt die Deaktivierungsvorrichtung 31 in der elektrischen Verbindung zu den Elektromagneten 17, 27. Mittels der Deaktivierungsvorrichtung 31 lässt sich zusätzlich ein zugeordneter Elektromagnet 17, 27 komplett deaktivieren, sodass beispielsweise eine Produktion von Spritzgießteilen unter Ausschluss einer oder mehrerer Kavitäten fortgesetzt werden kann.

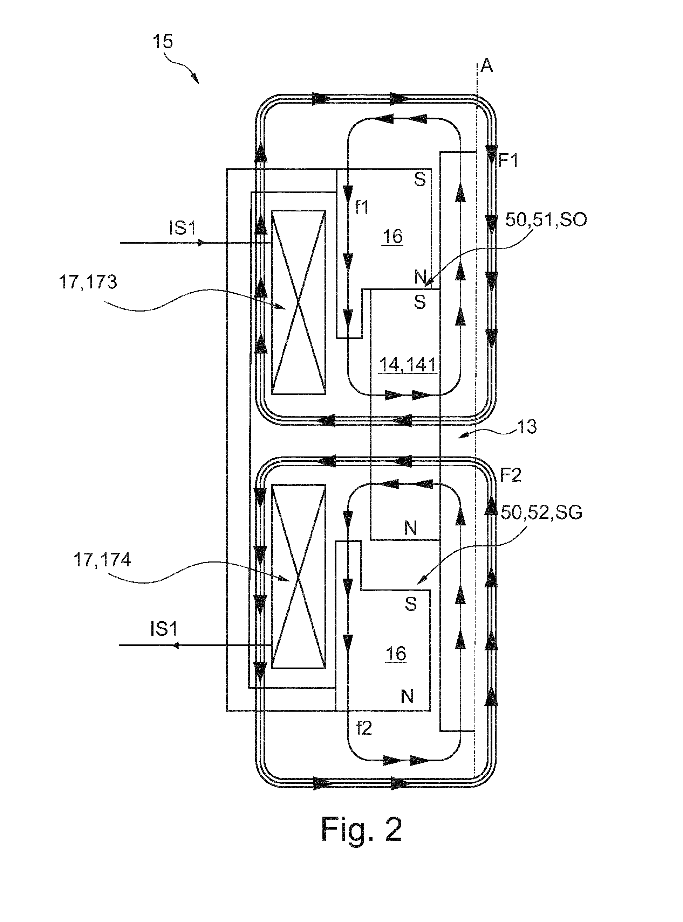

Fig. 2 beschreibt eine Ausführungsform eines elektromagnetischen Aktuators 15 mit einer Verschlussnadel 13, die einen Anker 14 aufweist. Die gezeigte Ansicht ist ein Schnitt, der durch Rotation um eine Rotationsachse A zu einem weitestgehend rotationssymmetrischen elektromagnetischen Aktuator 15 ausbildbar ist. Ausgenommen von der Rotationssymmetrie sind insbesondere elektrische Leitungen.

Der Anker 14 der Verschlussnadel 13 ist ein Ankermagneten 141 mit zwei Polen N, S. In axialer Richtung der Rotationsachse A sind zum Anker 14 zwei Permanentmagnete 16 angeordnet, die ebenfalls jeweils zwei Pole N, S haben. Alle Pole N, S sind axial relativ zur Verschlussnadel 13 ausgerichtet. Insbesondere der in Bildrichtung obere Permanentmagnet 16 zeigt mit seinem Nordpol N in Richtung des unterhalb von ihm angeordneten Ankermagneten 141, dessen Südpol S zum ersten Permanentmagneten 16 zeigt. Der erste Permanentmagnet 16 bildet eine Hubbegrenzung 50 in Form eines Öffnungsanschlags 51 aus, sodass der Anker 14 und der Permanentmagnet 16 in der abgebildeten Öffnungsstellung SO der Verschlussnadel 13 in Anlage sind.

Der zweite Permanentmagnet 16 ist in axialer Richtung unterhalb des Ankers 14 angeordnet und zeigt mit seinem Südpol S in Richtung des Ankers 14. Auch der zweite Permanentmagnet 16 bildet eine Hubbegrenzung 50 aus, die allerdings ein Schließanschlag 52 ist.

Radial zu dem oberen ersten Permanentmagneten 16 ist eine erste Spulenwicklung 173 eines Elektromagneten 17 angeordnet. Eine zweite in umgekehrte Richtung verlaufende Spulenwicklung 174 ist radial zum zweiten unteren Permanentmagneten 16 positioniert.

Wie bereits beschrieben, befindet sich die Verschlussnadel 13 in einer Öffnungsstellung SO. In dieser sind der Ankermagnet 141 mit seinem Südpol S und der obere erste Permanentmagnet 16 in Anlage. Ein zwischen diesen aufgebautes erstes Permanentmagnetfeld f1 hält die Verschlussnadel 13 in der Öffnungsstellung SO. Durch den Abstand des Südpols S des zweiten unteren Permanentmagneten 16 zum Nordpol N des Ankermagneten 141 ist die in Richtung der Schließstellung SG wirkende Kraft durch ein hier bestehendes Permanentmagnetfeld f2 zu gering, um die Verschlussnadel 13 in die Schließstellung SG zu bewegen.

Erst durch einen ersten Schließstromimpuls IS1 wird von der ersten Spulenwicklung 173 ein oberes erstes Elektromagnetfeld F2 erzeugt, welches das erste Permanentmagnetfeld f1 überlagert, sodass in Summe ein Magnetfeld in Richtung des Elektromagnetfeldes F1 vorliegt. Hierdurch kehrt sich die Pole N, S des oberen Permanentmagneten 16 um. Hierdurch wird der Ankermagnet 141 vom ersten oberen Permanentmagneten 16 abgestoßen und bewegt sich in Richtung Schließstellung SG. Zusätzlich verstärkt die untere zweite Spulenwicklung 174 durch ihr Elektromagnetfeld F2 das untere zweite Permanentmagnetfeld f2. Dies führt dazu, dass der Ankermagnet 141 auch aus Richtung des unteren zweiten Permanentmagneten 16 angezogen wird. Dies führt zu einer sehr schnellen Bewegung der Verschlussnadel 13 von der Öffnungsstellung SO in die Schließstellung SG.

Soll die Verschlussnadel 13 hingegen von der Schließstellung SG in die Öffnungsstellung SO bewegt werden, wird ein dem Schließstromimpuls IS1 entgegengesetzter Öffnungsstromimpuls OS1 durch die Spulenwicklungen 173, 174 geleitet. Ein sodann erzeugtes oberes Elektromagnetfeld wirkt entgegengesetzt zur gezeigten Richtung. Gleichsam wirkt ein erzeugtes unteres Elektromagnetfeld entgegengesetzt zur gezeigten Darstellung. Dadurch ist die Summe des ersten Permanentmagnetfelds f1 und des oberen Elektromagnetfelds größer als die Summe des zweiten Permanentmagnetfelds f2 und des unteren Elektromagnetfelds. Außerdem kehren sich die Pole N, S des unteren Permanentmagneten 16 durch das zweite Elektromagnetfeld F2 um. Der untere Permanentmagnet 141 stößt den Ankermagnet 141 folglich ab und der obere Permanentmagnet 16 zieht den Ankermagneten 141 an. Dementsprechend bewegt sich die mit dem Anker 14 verbundene Verschlussnadel 13 von der Schließstellung SG in die Öffnungsstellung SO.

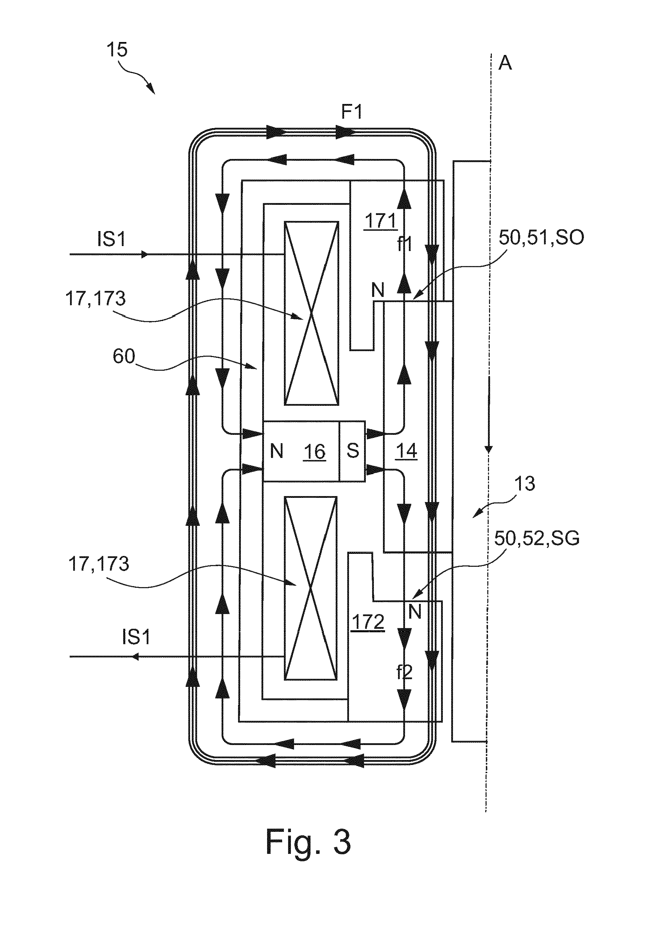

Fig. 3 zeigt eine andere Ausführungsform eines elektromagnetischen Aktuators 15 mit einer Verschlussnadel 13, die einen Anker 14 aufweist. Die gezeigte Ansicht ist ein Schnitt, der durch Rotation um eine Rotationsachse A zu einem weitestgehend rotationssymmetrischen elektromagnetischen Aktuator 15 ausbildbar ist. Ausgenommen von der Rotationssymmetrie sind insbesondere elektrische Leitungen.

Axial in Richtung der Rotationsachse A sind zum Anker 14 zwei Kerne 171, 172 des elektromagnetischen Aktuators 15 angeordnet. Der erste Kern 171 bildet eine Hubbegrenzung 50 in Form eines Öffnungsanschlags 51 aus, sodass der Anker 14 und der Kern 171 in der abgebildeten Öffnungsstellung SO der Verschlussnadel 13 in Anlage sind. Der zweite Kern 172 ist in axialer Richtung unterhalb des Ankers 14 angeordnet. Auch dieser bildet eine Hubbegrenzung 50 aus, die allerdings ein Schließanschlag 52 ist.

Radial zum oberen ersten Kern 171 ist eine erste Spulenwicklung 173 eines Elektromagneten 17 angeordnet. Eine zweite in gleiche Richtung verlaufende Spulenwicklung 174 ist radial zum zweiten Kern 172 positioniert. Ein magnetisierbares Gehäuse 60 verbindet die beiden Kerne 171, 172 und umfasst die Spulenwicklungen 173, 174. Weiterhin ist ein Permanentmagnet 16 zwischen den beiden Spulenwicklungen 173, 174 angeordnet. Dessen beide Pole N, S sind in radialer Richtung zur Rotationsachse A ausgerichtet. Insbesondere liegt der Nordpol N am Gehäuse 60 an und der Südpol S ist leicht beabstandet zum Anker 14 ausgerichtet.

Wie bereits beschrieben, befindet sich die Verschlussnadel 13 in einer Öffnungsstellung SO. In dieser sind der Anker 14 und der obere erste Kern 171 in Anlage. Durch den Kontakt des ersten Kerns 171 über das Gehäuse 60 zum Permanentmagneten 16, bildet der Kern 171 einen Nordpol N aus. Ein zwischen dem Kern 171 und dem Anker 14 aufgebautes erstes Permanentmagnetfeld f1 hält die Verschlussnadel 13 in der Öffnungsstellung SO.

Der Permanentmagnet 16 bildet über das Gehäuse 60 und den zweiten Kern 172 ein weiteres Permanentmagnetfeld f2 aus, wobei der zweite Kern 172 einen Nordpol N ausbildet. Durch den Abstand des zweiten Kerns 172 zum Anker 14 ist eine Kraft dieses zweiten unteren Permanentmagnetfelds f2 auf den Anker 14 jedoch geringer als die des ersten Permanentmagnetfelds f1. Mithin verbleibt die Verschlussnadel 13 in der Öffnungsstellung SO.

Erst durch einen ersten Schließstromimpuls IS1 wird ein Elektromagnetfeld F1 durch die Spulenwicklungen 173, 174 erzeugt. Dieses überlagert das erste Permanentmagnetfeld f1 in umgehrter Richtung, sodass das erste Permanentmagnetfeld f1 wenigstens teilweise neutralisiert wird.

Zusätzlich überlagert das Elektromagnetfeld F1 das untere zweite Permanentmagnetfeld f2 in gleicher Ausrichtung, sodass die Summe aus dem unteren Permanentmagnetfeld f2 und dem Elektromagnetfeld F1 größer ist als die Summe des ersten Permanentmagnetfelds f1 und dem Elektromagnetfeld F1. Dies führt dazu, dass der Anker 14 aus Richtung des unteren zweiten Kerns 172 angezogen wird. Hierdurch wird der Anker 14 vom ersten oberen Permanentmagneten 16 in Richtung der Schließstellung SG bewegt.

Soll die Verschlussnadel 13 hingegen von der Schließstellung SG in die Öffnungsstellung SO bewegt werden, wird ein dem Schließstromimpuls IS1 entgegengesetzter Öffnungsstromimpuls durch die Spulenwicklungen 173, 174 geleitet. Ein sodann erzeugtes Elektromagnetfeld wirkt entgegengesetzt zur gezeigten Richtung. Dadurch ist die Summe des ersten Permanentmagnetfelds f1 und dieses Elektromagnetfelds größer als die Summe des zweiten Permanentmagnetfelds f2 und des Elektromagnetfelds. Dementsprechend bewegt sich die mit dem Anker 14 verbundene Verschlussnadel 13 von der Schließstellung SG in die Öffnungsstellung SO.

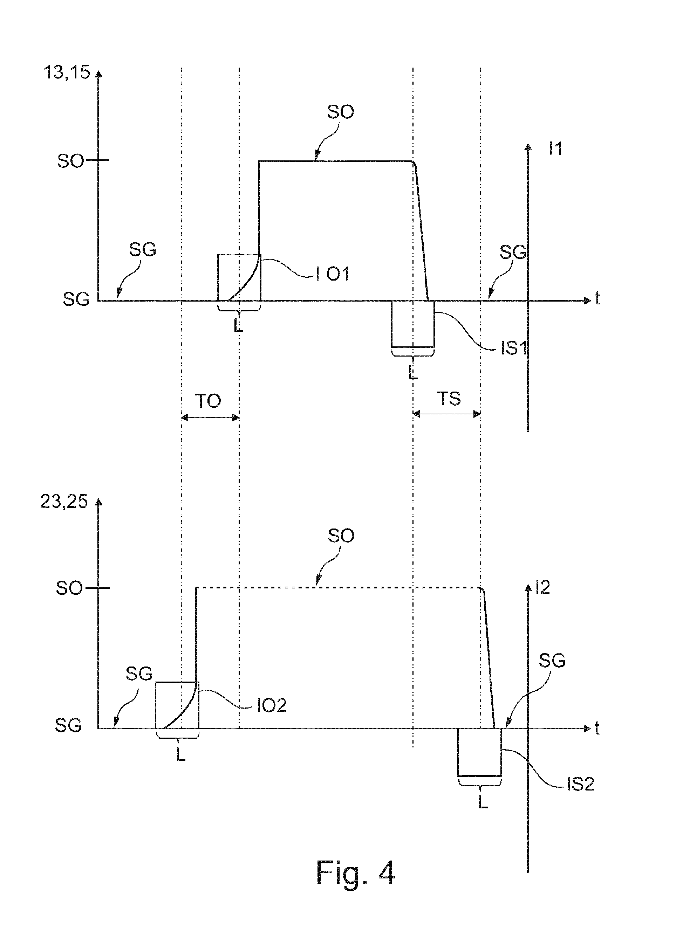

Fig. 4 offenbart ein Diagramm, welches die Öffnungsstellungen SO und Schließstellungen SG von zwei Verschlussnadeln 13, 23 gegenüberstellt, welche von einem ersten elektromagnetischen Aktuator 15 und einem zweiten elektromagnetischen Aktuator 25 betätigt werden. Hierfür ist auf der Abszisse eine Zeit t aufgetragen.

Der in Bildrichtung oben angeordneten Abszisse Zeit t, sind zwei Ordinaten zugeordnet. Auf der ersten Ordinate (in Bildrichtung links) ist der Stellweg des ersten elektromagnetischen Aktuators 15, bzw. der ersten Verschlussnadel 13 aufgetragen, wobei insbesondere deren Schließstellung SG und Öffnungsstellung SO gekennzeichnet sind. Die Daten der zweiten Ordinate (in Bildrichtung rechts) umfassen erste Stromimpulse I1, welche von einer Steuereinheit an den ersten elektromagnetischen Aktuator 15 gesendet werden.

Wie bei einer chronologischen Betrachtung der dargestellten Graphen erkennbar ist, befindet sich die vom ersten elektromagnetischen Aktuator 15 betriebene Verschlussnadel 13 zunächst in einer Schließstellung SG. Anschließend wird von der Steuereinheit ein erster Öffnungsstromimpuls IO1 an den ersten elektromagnetischen Aktuator 15 gesendet, der eine zeitliche Impulslänge L aufweist. Während dieser Impulslänge L, die in der Steuereinheit definiert ist und zwischen 0,1 - 0,5 Sekunden lang ist, bewegt sich die erste Verschlussnadel 13 in die Öffnungsstellung SO. In dieser verbleibt sie, bis die Steuereinheit einen ersten Schließstromimpuls IS1 an den ersten elektromagnetischen Aktuator 15 sendet. Dieser hat ebenfalls eine zeitliche Impulslänge L. Während dieser Impulslänge L bewegt sich die erste Verschlussnadel 13 wieder in die Schließstellung SG.

Der in Bildrichtung unten angeordneten Abszisse Zeit t, sind ebenfalls zwei Ordinaten zugeordnet. Auf der ersten Ordinate (in Bildrichtung links) ist der Stellweg des zweiten elektromagnetischen Aktuators 25, bzw. der zweiten Verschlussnadel 23 aufgetragen, wobei insbesondere deren Schließstellung SG und Öffnungsstellung SO gekennzeichnet sind. Die Daten der zweiten Ordinate (in Bildrichtung rechts) umfassen zweite Stromimpulse I2, welche von einer Steuereinheit an den zweiten elektromagnetischen Aktuator 25 gesendet werden.

Wie bei einer chronologischen Betrachtung der dargestellten Graphen erkennbar ist, befindet sich die vom zweiten elektromagnetischen Aktuator 25 betriebene Verschlussnadel 23 zunächst in einer Schließstellung SG. Anschließend wird von der Steuereinheit ein zweiter Öffnungsstromimpuls IO2 an den zweiten elektromagnetischen Aktuator 25 gesendet, der eine zeitliche Impulslänge L aufweist. Diese ist in der Steuereinheit definiert und zwischen 0,1 - 0,5 Sekunden lang. Dabei erfolgt dieser zweite Öffnungsstromimpuls IO2 zeitversetzt um ein Öffnungszeitdelta TO zum an den ersten elektromagnetischen Aktuator 15 gesendeten ersten Öffnungsstromimpuls IO1. Insbesondere wird er zeitlich vor dem ersten Öffnungsstromimpuls IO1 gesendet.

Während dieser Impulslänge L des zweiten Öffnungsstromimpulses IO2, bewegt sich die zweite Verschlussnadel 23 in die Öffnungsstellung SO. In dieser verbleibt sie, bis die Steuereinheit einen zweiten Schließstromimpuls IS2 an den zweiten elektromagnetischen Aktuator 25 sendet. Dieser hat ebenfalls eine zeitliche Impulslänge L. Dabei erfolgt der zweite Schließstromimpuls IS2 zeitversetzt um ein Schließzeitdelta TS zum an den ersten elektromagnetischen Aktuator 15 gesendeten ersten Schließstromimpuls IS1. Insbesondere wird er zeitlich nach dem ersten Schließstromimpuls IS1 gesendet.

Durch diese zeitgenaue Auslegung der Stellungen SO, SG der Verschlussnadeln 13, 23 durch die zeitversetzten Stromimpulse I1, I2 ist es möglich, dass jede Kavität in einem Werkzeug vollständig gefüllt wird und so optimale Spritzgießteile gefertigt werden können. Auf diese Weise lässt sich zum Beispiel eine unvollkommene Balancierung eines Verteilers korrigieren oder aber die Balancierung ausschließlich über die Steuerung der Verschlussnadeln 13, 23 durchführen.

Die Erfindung ist nicht auf eine der vorbeschriebenen Ausführungsformen beschränkt, sondern in vielfältiger Weise abwandelbar. Insbesondere können mehr als nur zwei Nadelverschlussdüsen und/oder Kavitäten vorgesehen werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Spritzgießvorrichtung

- 10: erste Kavität
- 11: erste Angussöffnung
- 12: erste Nadelverschlussdüse
- 13: erste Verschlussnadel
- 14: erster Anker
- 141: erster Ankermagnet
- 15: erster elektromagnetischer Aktuator
- 16: erster Permanentmagnet
- 17: erster Elektromagnet
- 171: erster Kern
- 172: zweiter Kern
- 173: erste Spulenwicklung
- 174: zweite Spulenwicklung
- 18: erster Sensor
- 19: erster Düsenzuführkanal

- 20: zweite Kavität
- 21: zweite Angussöffnung
- 22: zweite Nadelverschlussdüse
- 23: zweite Verschlussnadel
- 24: zweiter Anker
- 25: zweiter elektromagnetischer Aktuator
- 26: zweiter Permanentmagnet
- 27: zweiter Elektromagnet
- 28: zweiter Sensor
- 29: zweiter Düsenzuführkanal

- 30: Steuereinheit
- 31: Deaktivierungsvorrichtung
- 32: Anzeigeeinrichtung
- 33: Bedieneinheit

- 40: Verteiler

- 50: Hubbegrenzung
- 51: Öffnungsanschlag
- 52: Schließanschlag

- 60: Gehäuse

- A: Rotationsachse
- f1: erstes permanentes Magnetfeld
- f2: zweites permanentes Magnetfeld
- F1: erstes Elektromagnetfeld
- F2: zweites Elektromagnetfeld
- I1: erste Stromimpulse
- I2: zweite Stromimpulse
- IO1: erste Öffnungsstromimpulse
- IO2: zweite Öffnungsstromimpulse
- IS1: erste Schließstromimpulse
- IS2: zweite Schließstromimpulse
- L: Impulslänge
- M: fließfähige Masse
- N: magnetischer Nordpol
- S: magnetischer Südpol
- SG: Schließstellung
- SO: Öffnungsstellung
- t: Zeit
- TS: Schließzeitdelta
- TO: Öffnungszeitdelta

## Patentansprüche

1. Verfahren zum Betrieb mehrerer Nadelverschlussdüsen (12, 22) in einer Spritzgießvorrichtung (1), **gekennzeichnet durch** folgende Merkmale:
■ die Spritzgießvorrichtung (1) weist wenigstens zwei Kavitäten (10, 20) und pro Kavität (10, 20) wenigstens eine Nadelverschlussdüse (12, 22) auf,
■ jede Nadelverschlussdüse (12, 22) hat eine Verschlussnadel (13, 23), die mittels eines elektromagnetischen Aktuators (15, 25) in eine Öffnungs- (SO) und in eine Schließstellung (SG) gebracht werden kann, um eine in der jeweils zugeordneten Kavität (10, 20) ausgebildete Angussöffnung (11, 21) freizugeben und zu verschließen,
■ jeder elektromagnetische Aktuator (15, 25) weist wenigstens einen Elektromagneten (17, 27) auf,
■ jede Verschlussnadel (13, 23) wird in der Öffnungs- (SO) und in der Schließstellung (SG) von wenigstens einem Permanentmagnet (16, 26) axial gehalten,
■ eine Steuereinheit (30) der Spritzgießvorrichtung (1) erzeugt für jeden elektromagnetische Aktuator (15, 25) der Nadelverschlussdüsen (12, 22) individuelle Stromimpulse (I1, I2),
■ die Stromimpulse (I1, I2) haben eine definierte und in der Steuereinheit (30) hinterlegte Impulslänge (L),
■ ein von einem Stromimpuls (I1, I2) durchströmter Elektromagnet (17, 27) eines elektromagnetischen Aktuators (15, 25) erzeugt ein elektromagnetisches Feld (F), so dass die Kraft zwischen der Verschlussnadel (13, 23) und dem Permanentmagnet (16, 26) überwunden und die Verschlussnadel (13, 23) von der Schließstellung (SG) in die Öffnungsstellung (SO) oder von der Öffnungsstellung (SO) in die Schließstellung (SG) bewegt wird,
■ die Stromimpulse (I1, I2) von wenigstens zwei elektromagnetischen Aktuatoren (15, 25) werden zeitversetzt an diese gesendet.

2. Verfahren nach Anspruch 1, **dadurch gekennzeichnet, dass** die Stromimpulse (I1, I2) für einen elektromagnetischen Aktuator (15, 25) Öffnungsstromimpulse (IO1, IO2) zum Verbringen einer Verschlussnadel (13, 23) von einer Schließstellung (SG) in eine Öffnungsstellung (SO) oder Schließstromimpulse (IS1, IS2) mit umgekehrter Stromrichtung zum Verbringen einer Verschlussnadel (13, 23) von einer Öffnungsstellung (SO) in eine Schließstellung (SG) sind, wobei die Öffnungsstromimpulse (IO1, IO2) und/oder die Schließstromimpulse (IS1, IS2) zeitversetzt an die elektromagnetischen Aktuatoren (15, 25) gesendet werden.

3. Verfahren nach Anspruch 2, **dadurch gekennzeichnet, dass** die Öffnungsstromimpulse (IO1, IO2) um definierte und in der Steuereinheit (30) hinterlegte Öffnungszeitdelta (TO) und/oder die Schließstromimpulse (IS1, IS2) um definierte und in der Steuereinheit (30) hinterlegte Schließzeitdelta (TS) zeitversetzt an die elektromagnetischen Aktuatoren (14, 24) gesendet werden.

4. Verfahren nach Anspruch 1, **dadurch gekennzeichnet, dass** die Stromimpulse (I1, I2) um definierte und in der Steuereinheit (30) hinterlegte Öffnungszeitdelta (TO) und/oder Schließzeitdelta (TS) zeitversetzt an die elektromagnetischen Aktuatoren (15, 25) gesendet werden.

5. Verfahren nach einem der Ansprüche 3 oder 4, **dadurch gekennzeichnet, dass** das Öffnungszeitdelta (TO) und/oder das Schließzeitdelta (TS) in der Steuereinheit (30) derart eingestellt werden, dass die Kavitäten (10, 20) während einer Öffnungsstellung (SO) der Verschlussnadeln (13, 23) mit einer idealen Menge an fließfähiger Masse (M) gefüllt werden.

6. Verfahren nach einem der Ansprüche 3 bis 5, **dadurch gekennzeichnet, dass** das Öffnungszeitdelta (TO) und/oder das Schließzeitdelta (TS) mit einer Genauigkeit von wenigstens 1/100 Sekunde in der Steuereinheit (30) hinterlegt sind.

7. Verfahren nach einem der Ansprüche 3 bis 6, **dadurch gekennzeichnet, dass** mittels Sensoren (18, 28) eine Füllstandsmessung in den Kavitäten (10, 20) erfolgt und die Öffnungszeitdeltas (TO) und/oder die Schließzeitdeltas (TS) von der Steuereinheit (30) berechnet und/oder angepasst werden.

8. Verfahren nach einem der Ansprüche 3 bis 7, **dadurch gekennzeichnet, dass** für unterschiedliche Spritzgussszenarien separate Öffnungszeitdeltas (TO) und/oder Schließzeitdeltas (TS) in der Steuereinheit (30) hinterlegt sind, und eines der Spritzgussszenarien ausgewählt wird.

9. Verfahren nach einem der vorhergehenden Ansprüche, **dadurch gekennzeichnet, dass** jede Verschlussnadel (13, 23) einen bewegungsgekoppelten Anker (14, 24) aufweist, der mit den Permanentmagneten (16, 26) und den Elektromagneten (17, 27) korrespondiert.

10. Verfahren nach Anspruch 9, **dadurch gekennzeichnet, dass** jeder Anker (14, 24) einen Ankermagneten (241) aufweist, der mit den Permanentmagneten (16, 26) und den Elektromagneten (17, 27) korrespondiert.

11. Verfahren nach einem der vorhergehenden Ansprüche, **dadurch gekennzeichnet, dass** die Nadelverschlussdüsen (11, 21) über Düsenzuführkanäle (19, 29) und diese über einen gemeinsamen Verteiler (40) strömungsverbunden sind.
